# EUROPÄISCHE PATENTSCHRIFT

(11) **EP 1 784 743 B1**
(45) Veröffentlichungstag und Bekanntmachung des Hinweises auf die Patenterteilung: **05.03.2008**
(21) Anmeldenummer: 05779235.0
(22) Anmeldetag: 12.08.2005
(51) Int. Cl.: G06F 17/00

(54) **VERFAHREN UND ANORDNUNG ZUR VERGEBÜHRUNG IN EINEM PEER-TO-PEER NETZWERK**
BILLING METHOD AND SYSTEM IN A PEER-TO-PEER NETWORK
PROCEDE ET DISPOSITIF POUR ETABLIR UNE TAXATION DANS UN RESEAU POSTE A POSTE

(30) Priorität: 23.08.2004 DE 102004040768
(43) Veröffentlichungstag der Anmeldung: 16.05.2007
(73) Patentinhaber: Nokia Siemens Networks GmbH & Co. KG, 81541 München (DE)
(72) Erfinder: LIEBE, Gerald, 15344 Strausberg (DE); BUSSER, Jens-Uwe, 81739 München (DE)
(86) Internationale Anmeldenummer: PCT/EP2005/053986
(87) Internationale Veröffentlichungsnummer: WO 2006/021524

(56) Entgegenhaltungen:
- EP-A- 1 347 617

## Beschreibung

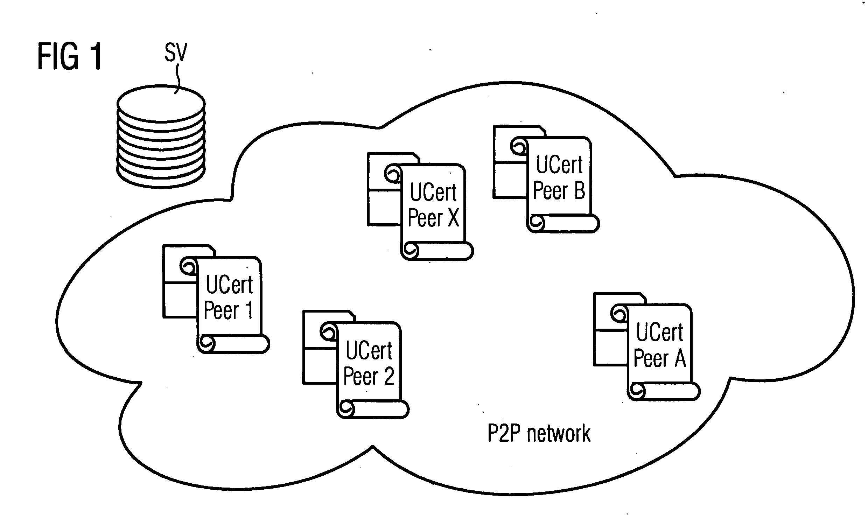

Gegeben sein ein Peer-to-Peer-Netzwerk basierend auf verteilten Hash-Tabellen (DHTs). Einen Überblick über solche Netzwerke gibt es beispielsweise in [1]. Die Darstellung eines beispielhaften Peer-to-Peer Netzwerks ist in Figur 1 zu entnehmen. In diesem Netzwerk werden Informationen (im Folgenden als Ressourcen bezeichnet) dezentral auf denjenigen Einheiten gespeichert, deren "P2P-Adresse" (z. B. der Hashwert auf IP-Adresse und Portnummer) am besten mit der Key ID der Ressource (z. B. Hashwert eines Suchbegriffs etc.) übereinstimmt, gemessen an der jeweiligen Metrik des P2P-Algorithmus [2, 3].

Die Geräte (im Folgenden als Peers oder Stationen bezeichnet) in diesem Netzwerk sollen sich selbst bzw. die von ihnen erzeugten Nachrichten beispielsweise durch digitale Signaturen und Zertifikate authentifizieren und autorisieren. Diese Zertifikate werden von einer vertrauenswürdigen, zentralen Stelle (Certificate Authority CA) im Voraus ausgestellt und als Ressource ins P2P-Netzwerk eingebracht [1].

Die europaïsche Patentanmeldung EP-A-1347617 ist ein Beispiel für ein System und Verfahren zur Vergebührung von Informationen in einem Peer-to-Peer Netzwerk.

Werden bestimmte Daten DAT (eigenes Anwenderprofil, Nachrichten an abwesende Peers, etc.) als Ressourcen ins P2P-Netzwerk eingebracht, so müssen sie vom erzeugenden PeerA digital signiert werden. PeerA berechnet dazu einen kryptografischen Hashwert (z.B. mit dem Hash-Verfahren SHA-1) der Daten DAT, und signiert diesen Hashwert anschließend mit seinem privaten Schlüssel P_{A} [1]. Dieser komplette Datensatz muss zur Vergebührung auch an eine Sammelstelle übertragen werden. Auch wenn ein Peer eine bestimmte Ressource (fremdes Anwenderprofil, für ihn gespeicherte Nachricht, etc.) von einem anderen Peer erhalten will, muss er eine signierte Anfrage erstellen. Dadurch ist es möglich, eine nicht zurückweisbare, verbrauchsbezogene Vergebührung durchzuführen, sofern diese signierten Ressourcen vollständig an eine zentrale Sammelstelle gesendet werden, welche die Auswertungen vornimmt.

Diese kann aber zu erheblichen Problemen führen, wenn diese Datensätze recht groß (mehrere MB) werden. Auch wenn das Einsammeln der Vergebührungsinformationen nicht in Echtzeit erfolgen muss, müssen die Sammelstellen jedoch alle Ressourcen sehr vieler Peers mindestens einmal, meist sogar mehrfach empfangen und auswerten.

Überträgt man aber nicht die komplette Ressource, sondern nur ihren Hashwert mit der Signatur, so wären folgende Manipulationen möglich:
Fall 1: PeerB könnte Signaturen von PeerA sammeln, welche dieser mit dem gleichen privaten Schlüssel P_{A} für andere Anwendungen oder zu früheren Zeiten erstellt hat, und als Ressourcen im P2P-Netzwerk ablegen - kostenpflichtig für Peer A.
Fall 2: PeerA könnte andererseits behaupten, dass er die ihm in Rechnung gestellten Dienstleistungen nicht bestellt und die Signaturen für andere Anwendungen erstellt hätte; PeerA könnte damit die Vergebührung als fehlerhaft zurückweisen.

Da man aus dem Hashwert die ursprüngliche Nachricht nicht mehr rekonstruieren kann, ist eine Unterscheidung zwischen Fall 1 und 2 nicht möglich, wenn man den ursprünglichen Datensatz nicht mehr hat. Die Unleugbarkeit der erbrachten Dienstleistungen wäre somit nicht mehr gewährleistet.

Die der Erfindung zugrunde liegende Aufgabe ist es ein Verfahren und eine Anordnung anzugeben, welche die unleugbare Vergebührung in Peer-to-Peer Netzwerken ermöglichen.

Diese Aufgabe wird ausgehend von dem Verfahren gemäß dem Obergriff des Anspruchs 1 durch dessen kennzeichnende Merkmale gelöst sowie ausgehend von der Anordnung gemäß dem Oberbegriff des Anspruchs 2 durch dessen kennzeichnenden Merkmale gelöst.

Das erfindungsgemäße Verfahren zeichnet sich dadurch aus, dass die Größe der an die Sammelstelle zu übertragenden Daten erheblich reduziert, und dennoch eine nicht zurückweisbare Vergebührung gewährleistet wird.

Erfindungsgemäß werden dazu aus dem Datensatz DAT, welcher als Ressource abgelegt werden soll oder mit den Daten von einem anderen Peer abgefragt werden, zunächst die für die Vergebührung notwendigen Informationen INFO extrahiert, beispielsweise Name des signierenden Peers, Art der Dienstleistung, Zeitpunkt ihrer Erbringung, Größe der hinterlegten Sprachnachricht, Dringlichkeit der Ausführungen, etc. Außerdem wird der Hashwert des Datensatzes berechnet. Dieser Hashwert wird dann mit den Vergebührungsinformationen zusammen noch einmal gehasht und dies dann erst signiert. Anschließend wird der Datensatz zusammen mit den Vergebührungsinformationen und der Signatur, z. B. als Ressource im P2P-Netzwerk abgelegt. Die Sammelstelle benötigt dann nicht mehr die Daten DAT selbst, die viel umfangreicher als der Rest sein können. Sie benötigt nur noch den Hashwert der Daten DAT, die Vergebührungsinformationen INFO sowie die Signatur über beides. Es müssen somit nur noch maximal ca. 500 Byte an die Sammelstelle übertragen werden. Eine Zurückweisung wegen Unbeweisbarkeit ist dennoch nicht möglich.

Sendet PeerB nun veraltete Vergebührungsinformationen von PeerA an die Sammelstelle, so kann diese das aufgrund des darin vermerkten Zeitpunktes erkennen. Besitzt PeerB von PeerA erzeugte Signaturen, so kann PeerB zu diesen Signaturen keine passenden Vergebührungsinformationen erzeugen. Damit ist bei allen gültigen signierten Vergebührungsinformationen sichergestellt, dass nur PeerA selbst sie hat erzeugen können. PeerA kann dann die Vergebührung nicht mehr als fehlerhaft zurückweisen. Der Rechenaufwand der Peers erhöht sich damit von 1 Hash und 1 Signatur auf 2 Hash und 1 Signatur, was aber vernachlässigbar ist, da eine Signaturberechnung erheblich aufwändiger ist eine Hashwertberechnung und jeder Peer im Vergleich zur Sammelstelle sowieso nur sehr wenige Berechnungen durchführt. Der Rechenaufwand der Sammelstelle bleibt dagegen unverändert bei 1 Hash und 1 Signatur.

Weitere Vorteile und Einzelheiten der Erfindung werden anhand eines Ausführungsbeispiels ausgehend von den Figuren 1 bis 3 erläutert. Davon zeigt:
- Figur 1: eine Beispiel für ein Peer-to-Peer Netzwerk in dem das erfindungsgemäße Verfahren zum Tragen kommt;
- Figur 2: die Darstellung eines Beispiels für eine nach bisherigen Methoden signierte Ressource;
- Figur 3: eine tabellarische Darstellung eines Ausführungsbeispiels des erfindungsgemäßen Verfahrens;

In Figur 1 ist ein Beispiel für ein Peer-to-Peer Netzwerk P2P-network dargestellt. Ein solches Netzwerk zeichnet sich unter anderem dadurch aus, dass einzelne Stationen Peer1, Peer2...PeerB sich gebührenpflichtige Dienstleistungen erbringen und auch nutzen. Ausgehend von einer derartigen Anordnung setzt die Erfindung an, um eine unleugbare Vergebührung zu gewährleisten, die zudem auch den Aufwand reduziert bzw. die Ressourcen im Vergleich zu den bisher bekannten Verfahren schont.

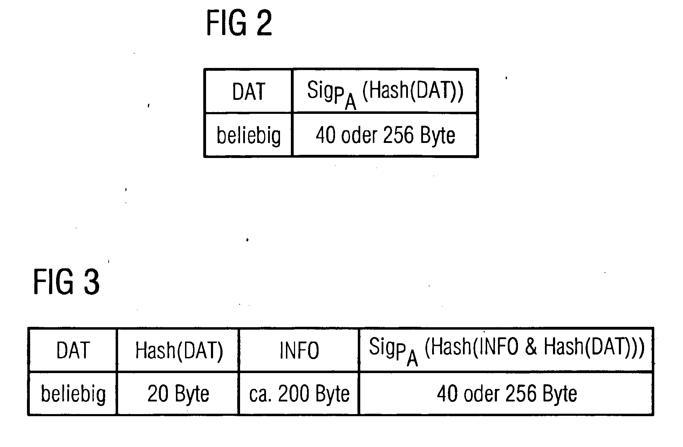

Die üblichen Verfahren haben nämlich den Nachteil, dass zur Vergebührung notwendige Daten eine hohe Bytezahl aufweisen, da wie es in Figur 2 zu erkennen ist, die gesamten stationsbezogenen Daten gehasht und vor allem übertragen werden. Zudem ist die Unleugbarkeit nicht gegeben.

Dagegen werden erfindungsgemäß für die Vergebührung notwendige Daten INFO aus den stationsbezogenen Daten DAT einer Station PeerA extrahiert. Anschließend wird aus den stationsbezogenen Daten ein erster Hash-Wert gebildet und aus diesem ersten Hash-Wert und den notwendigen Daten INFO ein zweiter Hash-Wert erzeugt, der mit dem Schlüssel P_{A} des Peers PeerA signiert für die Vergebührung zur Verfügung steht.

Durch das erfindungsgemäße Verfahren ergibt als ein wesentlicher Vorteil, dass signierte Datensätze, welche zwecks Vergebührung an zentrale Sammelstellen übertragen werden müssen, erheblich verkleinert werden. Zudem ist kein zusätzlicher Rechenaufwand für eine in die Vergebührung involvierte Sammelstelle SV erforderlich. Letztlich ist nur jeweils eine zusätzliche Hashwertberechnung für die Peers Peer1, Peer2, PeerA...PeerB von Nöten.

Die Erfindung soll dabei nicht auf die erläuterten Ausführungsbeispiele beschränkt sein, sondern vielmehr alle im Rahmen des fachmännischen Könnens erzeugbaren Variationen umfassen, die die erfindungswesentlichen Elemente - Extrahieren für die Durchführung der Vergebührung notwendiger Daten aus stationsbezogenen Daten, Hashen der stationsbezogenen Daten, sowie Hash-Wertbildung aus den notwendigen Daten und den gehashten stationsbezogenen Daten - umfassen.

### Literatur

[1] Thomas Friese: "Selbstorganisierende Peer-to-Peer-Netzwerke", Diplomarbeit an der Philipps-Universität Marburg, März 2002
[2] Petar Maymounkov, David Mazieres: "Kademlia: A Peer to Peer Information System Bases on the XOR Metric", New York University
[3] Stoica, Morris, Karger, Kaashoek, Balakrishnan: "Chord: A Scalable Peer-to-Peer Lookup Service for Internet Applications", MIT Laboratory for Computer Science, 2001

## Patentansprüche

1. Verfahren zur Vergebührung in einem Peer-to-Peer Netzwerk (P2P-network) mit einer Vielzahl von Stationen (Peer1, Peer2, Peer3, PeerA, PeerB, PeerX), bei dem zumindest ein erster Teil der Stationen zumindest temporär einen gebührenpflichtigen Dienst für zumindest einen zweiten Teil der Stationen bereitstellt, wobei durch Nutzung des Dienstes stationsbezogene Vergebührungsdaten anfallen, **dadurch gekennzeichnet, dass**
a) im Rahmen der Vergebührung der Dienstnutzung durch eine kryptografische Hash-Funktion aus einem Datensatz (DAT) ein erster Hash-Wert (HASH[DAT]) gebildet wird,
b) aus dem Datensatz (DAT) diejenigen Datenteile (INFO) extrahiert werden, die für eine Vergebührung notwendig sind,
c) aus den Datenteilen (INFO) gemeinsam mit dem ersten Hash-Wert (HASH[DAT]) durch eine kryptografische Hash-Funktion ein zweiter Hash-Wert (HASH[INFO & HASH[DAT]]) gebildet wird,
d) dieser zweite Hashwert signiert wird,
e) die Vergebührung auf Grundlage zumindest des zweiten, signierten Hashwerts erfolgt.

2. Anordnung (Peer1, Peer2, Peer3, PeerA, PeerB, PeerX, SV) zur Vergebührung in einem Peer-to-Peer Netzwerk (P2P-network) mit einer Vielzahl von Stationen (Peer1, Peer2, Peer3, PeerA, PeerB, PeerX), bei dem zumindest ein erster Teil der Stationen zumindest temporär einen gebührenpflichtigen Dienst für zumindest einen zweiten Teil der Stationen bereitstellt, wobei durch Nutzung des Dienstes stationsbezogene Vergebührungsdaten anfallen, **gekennzeichnet durch** Mittel zur Durchführung des Verfahrens nach einem der vorhergehenden Ansprüche.

## Claims

1. Method for charging in a peer-to-peer network (P2P network) having a multiplicity of stations (Peer1, Peer2, Peer3, PeerA, PeerB, PeerX), in which at least a first portion of the stations at least temporarily provides a charge-incurring service for at least a second portion of the stations, with use of the service engendering station-related charging data, **characterized in that**
a) the charging for the service use involves a cryptographic hash function taking a data record (DAT) and forming a first hash value (HASH[DAT]),
b) those data portions (INFO) which are necessary for charging are extracted from the data record (DAT),
c) a cryptographic hash function forms a second hash value (HASH[INFO & HASH[DAT]]) from the data portions (INFO) together with the first hash value (HASH[DAT]),
d) this second hash value is signed,
e) the charging takes place on the basis of at least the second, signed hash value.

2. Arrangement (Peer1, Peer2, Peer3, PeerA, PeerB, PeerX, SV) for charging in a peer-to-peer network (P2P network) having a multiplicity of stations (Peer1, Peer2, Peer3, PeerA, PeerB, PeerX), in which at least a first portion of the stations at least temporarily provides a charge-incurring service for at least a second portion of the stations, with use of the service engendering station-related charging data, **characterized by** means for carrying out the method according to the preceding claim.

## Revendications

1. Procédé de taxation dans un réseau Peer-to-Peer (P2P-network) comprenant une pluralité de stations (Peer1, Peer2, Peer3, PeerA, PeerB, PeerX), dans lequel au moins une première partie des stations met à disposition de façon au moins temporaire un service payant pour au moins une seconde partie des stations, des données de taxation spécifiques à la station étant occasionnées par l'utilisation du service, **caractérisé en ce que**
a) dans le cadre de la taxation de l'utilisation de service, une première valeur de hachage (HASH[DAT]) est formée par une fonction de hachage cryptographique à partir d'un ensemble de données (DAT),
b) à partir de l'ensemble de données (DAT), on extrait les parties de données (INFO) qui sont nécessaires pour une taxation,
c) à partir des parties de données (INFO), une seconde valeur de hachage (HASH[INFO & HASH[DAT]]) est formée par une fonction de hachage cryptographique conjointement avec la première valeur de hachage (HASH[DAT]),
d) cette seconde valeur de hachage est signée,
e) la taxation s'effectue sur la base au moins de la seconde valeur de hachage signée.

2. Dispositif (Peer1, Peer2, Peer3, PeerA, PeerB, PeerX, SV) pour la taxation dans un réseau Peer-to-Peer (P2P-network) comprenant une pluralité de stations (Peer1, Peer2, Peer3, PeerA, PeerB, PeerX), dans lequel au moins une première partie des stations met à disposition de façon au moins temporaire un service payant pour au moins une seconde partie des stations, des données de taxation spécifiques à la station étant occasionnées par l'utilisation du service, **caractérisé par** des moyens pour la mise en oeuvre du procédé selon l'une quelconque des revendications précédentes.
